Europäisches Patentamt

(19) European Patent Office

Office européen des brevets

(11) Numéro de publication : **0 115 493**
**B1**

(12) FASCICULE DE BREVET EUROPÉEN

(45) Date de publication du fascicule du brevet :
03.12.86

(51) Int. Cl.⁴ : **A 23 K   3/00**, A 23 K   3/02,
F 26 B   1/00

(21) Numéro de dépôt : **83902266.2**

(22) Date de dépôt : **19.07.83**

(86) Numéro de dépôt international :
**PCT/FR 83/00147**

(87) Numéro de publication internationale :
**WO/8400475 (16.02.84 Gazette 84/05)**

(54) PROCEDE DE DESHYDRATATION DE VEGETAUX HUMIDES.

(30) Priorité : 30.07.82 FR 8213400

(43) Date de publication de la demande :
15.08.84 Bulletin 84/33

(45) Mention de la délivrance du brevet :
03.12.86 Bulletin 86/49

(84) Etats contractants désignés :
AT BE CH DE FR GB LI LU NL SE

(56) Documents cités :
EP-A- 0 014 908
WO-A-83 /005 47
DE-A- 1 939 943
FR-A- 2 106 708
FR-A- 2 148 157
FR-A- 2 302 048
FR-A- 2 380 740
FR-A- 2 401 223
FR-A- 2 441 813
FR-A- 2 473 271
US-A- 2 774 671
US-A- 3 551 163

(73) Titulaire : **BEGHIN-SAY SOCIETE ANONYME**
**F-59239 Thumeries (FR)**

(72) Inventeur : **CUEL, Jacques**
**47, Rue Galilée**
**F-75016 Paris (FR)**

(74) Mandataire : **Quéré, Jean Pierre**
**BEGHIN-SAY Service Propriété Industrielle 54, Avenue Hoche**
**F-75008 Paris (FR)**

Jouve, 18, rue St-Denis, 75001 Paris, France

## Description

La présente invention concerne un procédé de déshydratation de végétaux humides et notamment de pulpes de betteraves ou de luzerne.

Dans la demande de brevet français 8 114 670 déposée le 28 juillet 1981 (FR-A-2 510 736), la demanderesse décrit un procédé de séchage particulièrement avantageux au plan de la consommation d'énergie : des végétaux humides sont introduits dans un sécheur vertical pourvu de plateaux disposés en quinconce et chauffés par de la vapeur recomprimée à l'aide d'un motocompresseur.

La vapeur recomprimée provient notamment d'un évaporateur dont le faisceau est alimenté par le mélange air/vapeur issu de la matière humide, mélange ramené à saturation par échange avec un fluide froid.

Ce mélange air/vapeur saturée est injecté au bas du sécheur et participe au séchage de la matière humide : il sert de véhicule aux calories, en passant d'un état saturé à un état dans lequel il est capable d'emmagasiner des calories.

Il est, par ailleurs, connu de déshydrater des végétaux humides en y ajoutant une forte quantité de matières sèches, sous forme de solution très concentrée, ce qui augmente d'autant la proportion des matières sèches finale du mélange.

Ainsi, le brevet FR 2 401 223 décrit un procédé de fabrication de pulpes de betteraves traitées avec de la mélasse consistant à incorporer dans les pulpes pressées, une quantité importante de mélasse sous forme d'une solution ayant une teneur en matière sèche supérieure à 80 % (80 Brix) puis, à effectuer le pressage du mélange obtenu.

Le brevet US 3 551 163 décrit un procédé de récupération de pulpe d'agrumes, obtenue après pressage du fruit, afin de la rendre utilisable en tant que nourriture pour les animaux. Ce procédé fait intervenir deux pressages successifs avec, avant le second pressage, réimbibition de la matière humide avec les jus issus du premier et du second pressage. Le jus est concentré à plus de 70 Brix avant la réimbibition.

Il s'agit dans ce cas-là également d'un ajout important de matières sèches.

L'incorporation d'une solution à très haute teneur en matière sèche ne permet pas d'homogénéiser suffisamment le mélange et, de ce fait, le pressage ultérieur est rendu moins efficace. Ceci semble-t-il est dû au fait que, lorsque les solutions additionnées sont trop concentrées certains éléments essentiels qui renforcent les chaînes pectiques comme le calcium et l'aluminium ne peuvent pénétrer les espaces cellulaires des pulpes.

Le brevet FR 2 302 048 porte sur un procédé de séchage de végétaux qui consiste à les presser et les déshydrater dans une installation avec brûleur. La vapeur contenue dans les fumées est condensée dans un échangeur dans lequel on met à profit les calories prélevées dans les fumées au cours de la condensation de la vapeur d'eau notamment, pour la concentration des jus de pressage. Dans ce procédé toutefois, les vapeurs issues de la concentration des jus sont éliminées sans récupération possible de leurs calories.

Le brevet FR 2 441 813 porte sur un procédé de séchage où le produit est chauffé d'une part à partir des calories d'une partie des vapeurs issues du produit lui-même, d'autre part par mise en contact avec l'autre partie des vapeurs provenant du produit, surchauffées dans un échangeur. Cependant ce procédé ne fait pas intervenir le pressage préalable du produit et nécessite par ailleurs l'apport d'énergie d'une source thermique extérieure.

La présente invention a pour objet de permettre une meilleure déshydratation des végétaux lors de pressage et de réduire fortement les dépenses énergétiques nécessaires à l'élimination de l'eau.

L'invention consiste à faire subir à ces végétaux humides un ou plusieurs pressages successifs où le jus du dernier pressage concentré dans un évaporateur sert en régime continu établi, à réimbiber les végétaux humides avant ce dernier pressage. La concentration du jus de pressage est assurée par la production de vapeur.

Le procédé selon l'invention est particulièrement bien adapté :

1) au séchage des pulpes de betteraves auxquelles on fait subir un double pressage avec concentration du jus du second pressage et recyclage de celui-ci avant second pressage. De préférence le jus de pressage concentré présente une concentration inférieure à 40 % et avantageusement inférieure à 20 % et encore mieux, comprise entre 4 et 15 %.

2) au séchage de la luzerne à laquelle on fait subir un seul pressage avec concentration préalable du jus de pressage et recyclage de celui-ci. De préférence, le jus de pressage concentré présente une concentration inférieure à 55 % et supérieure à 20 %.

Selon la caractéristique de l'invention, les végétaux humides, après le dernier pressage, sont ensuite introduits dans un sécheur vertical dont les éléments chauffants sont alimentés par de la vapeur recomprimée à l'aide d'un motocompresseur qui est lui-même alimenté avec de la vapeur produite par l'évaporateur dont le fluide froid est constitué du jus provenant du dernier pressage, et dont le faisceau est alimenté par le mélange air vapeur des végétaux humides pendant leur séchage, le jus de pressage étant amené à une concentration inférieure à 60 % de matières sèches. Ce procédé est particulièrement économique et, en outre, ne fait appel qu'à de l'énergie électrique et non pas thermique comme dans les procédés décrits dans les brevets précédemment analysés.

Il est également possible de préchauffer le jus, avant entrée dans l'évaporateur, par passage dans un échangeur alimenté avec de l'eau de condensation de l'évaporateur.

Dans le cas de la luzerne, le jus provenant du pressage est floculé et centrifugé, avant concentration dans l'évaporateur, de façon à obtenir un sérum et un floculat constitué principalement de protéines. Dans ces conditions, le motocompresseur est avantageusement alimenté avec de la vapeur produite par l'évaporateur dont le fluide froid est constitué par le sérum séparé du jus du pressage et dont le faisceau est alimenté par le mélange air/vapeur issu de la luzerne humide pendant son séchage.

L'invention sera mieux comprise à l'aide des exemples et des dessins annexés dans lesquels :

la figure 1 présente le schéma de principe selon l'art antérieur d'une installation de double pressage de pulpes de betteraves, avec concentration du jus du second pressage

la figure 2 présente le schéma de déshydratation de pulpes de betteraves avec double pressage et concentration du jus du second pressage à 6 % de matières sèches

la figure 3 présente le schéma de séchage de pulpes de betteraves à l'aide d'un sécheur alimenté par de la vapeur recomprimée, les pulpes ayant subi un second pressage donnant un jus à 7,5 % de matières sèches

la figure 4 présente le schéma de déshydratation de luzerne avec pressage et concentration du jus de pressage

la figure 5 présente le schéma de séchage de luzerne à l'aide d'un sécheur alimenté par de la vapeur recomprimée, le jus du pressage étant concentré

la figure 6 présente le schéma de déshydratation de luzerne comportant une étape de concentration du sérum après floculation des protéines et centrifugation

la figure 7 présente le schéma de séchage de luzerne à l'aide d'un sécheur alimenté par de la vapeur recomprimée, comportant une étape de concentration du sérum après floculation des protéines et centrifugation.

Exemple 1

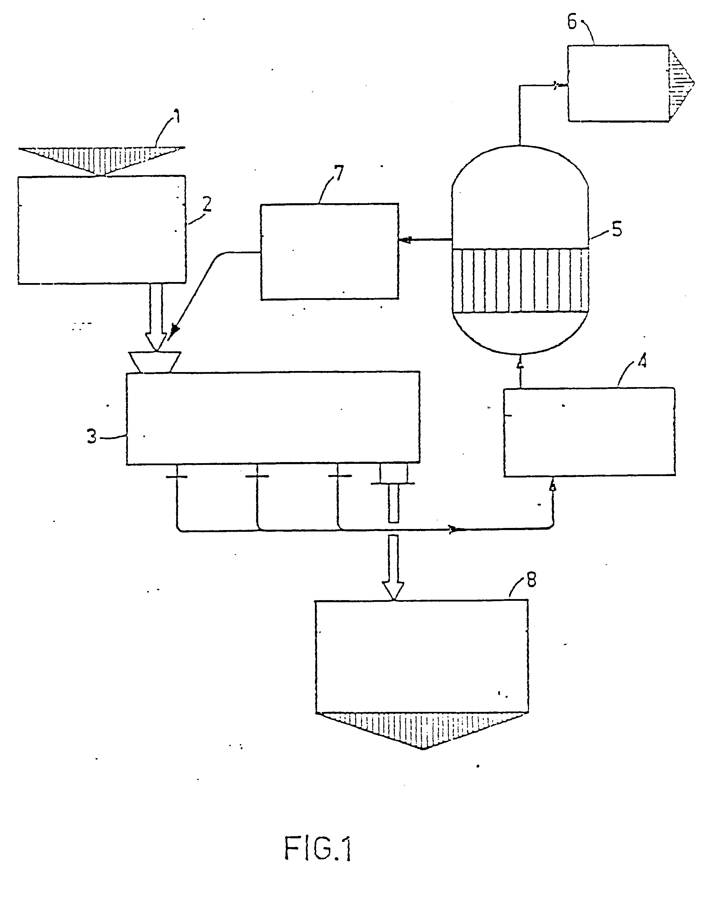

Figure 1 : En régime établi, des pulpes de betteraves (2) provenant d'une installation de pressage (1), contenant 900 kg de matières sèches et 3 000 kg d'eau, présentent une température de 60 °C. Après un second pressage (3) on récupère :

— un jus (4) constitué de 70,4 kg de matières sèches et 2 276 kg d'eau.

— des pulpes (8) partiellement déshydratées contenant 900 kg de matières sèches et 1 827 kg d'eau.

Le jus (4) est dirigé vers un évaporateur (5) qui génère 1 173 kg de vapeur à 60 °C.

Le jus concentré (7) contenant 70,4 kg de matières sèches et 1 103 kg d'eau est recyclé à l'entrée de l'étage de second pressage (3).

Exemple 2

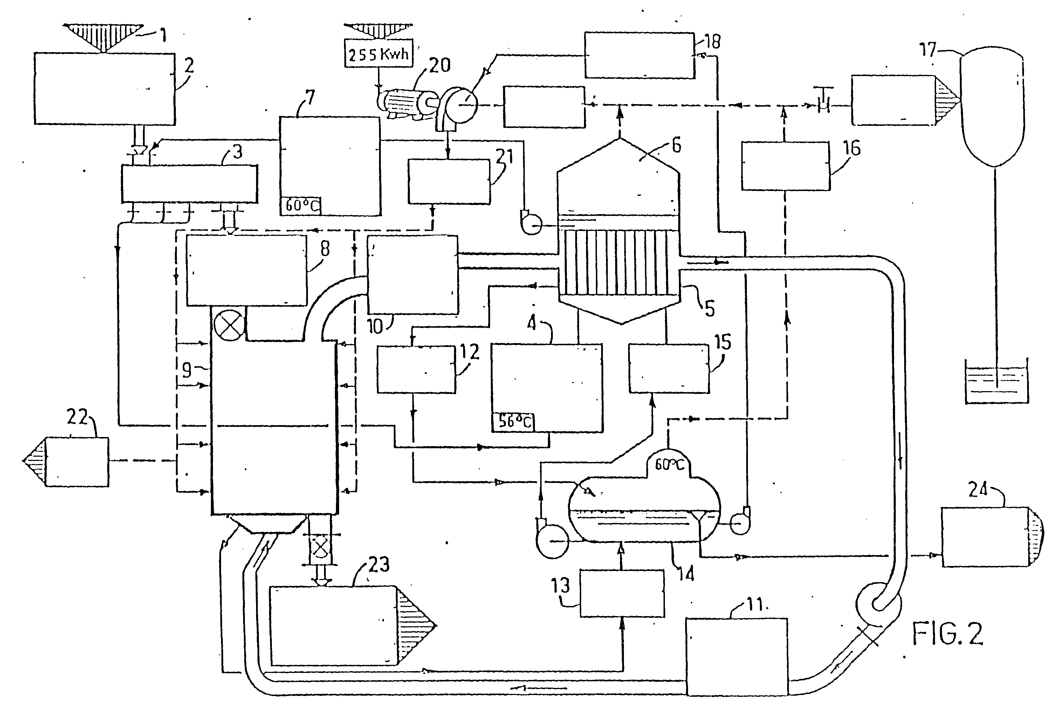

Figure 2 : En régime établi, les pulpes partiellement déshydratées (8) conformément à l'exemple 1 sont introduites dans un sécheur vertical (9).

Le jus (4) du second pressage dont la température est de 50 °C est dirigée vers un évaporateur (5) dont il constitue le fluide froid.

Le faisceau de l'évaporateur (5) est alimenté par un mélange (10) air/vapeur à 95 °C contenant 2 208 kg d'air et 2 340 kg de vapeur.

A la sortie du faisceau de l'évaporateur, on obtient un mélange (11) air/vapeur à 70 °C contenant 2 208 kg d'air et 613 kg de vapeur, qui est réinjecté dans le bas du sécheur (9).

On dirige vers un ballon d'auto-évaporation (14), les 1 842 kg à 75 °C des eaux de retour (13) du sécheur et les 1 727 kg à 75 °C des eaux de condensation (12) du mélange air/vapeur (10).

On envoie dans l'évaporateur 563 kg d'eau (15) à 60 °C — provenant du ballon (14) — qui sont totalement évaporés. A la sortie de l'évaporateur (5) on récupère 1 736 kg de vapeur (6) à 60 °C.

Le ballon (14) fournit 78 kg de vapeur (16) à 60 °C dont 68 kg sont dirigés vers un condenseur (17) et 10 kg vers le motocompresseur (20).

On apporte ainsi au motocompresseur (20) 1 746 kg de vapeur (19) à 60 °C et 262 kg d'eau de désurchauffe (18) provenant du ballon (14). Le motocompresseur (20) fournit 2 008 kg de vapeur (21) à 110 °C.

Les pertes (22) du système sont de 166 kg de vapeur. Le ballon (14) fournit 2 666 kg d'eau (24) à 60 °C.

A la sortie du sécheur on récupère 1 000 kg de pulpes de betteraves (23) contenant 900 kg de matières sèches et 100 kg d'eau.

On a ainsi éliminé 2 900 kg d'eau des pulpes humides sortant du premier étage de pressage (1).

La puissance nécessaire pour recomprimer les 1 746 kg de vapeur (16) est de 255 kWh. La dépense énergétique n'est donc que de 0,088 kWh par kg d'eau éliminé. Pour obtenir la dépense énergétique globale il faut tenir compte de l'énergie nécessaire pour mettre en œuvre le second pressage (2) qui est de 0,010 kWh par kg d'eau éliminé.

Le bilan global est donc une dépense de 0,098 kWh par kg d'eau éliminé, ce qui correspond à 245 kcal par kg d'eau éliminé, sur la base de 2,5 thermies par kWh (centrale à condensation).

Ce chiffre est à comparer aux 600-750 kcal par kg d'eau éliminé dépensées avec un sécheur classique.

Exemple 3

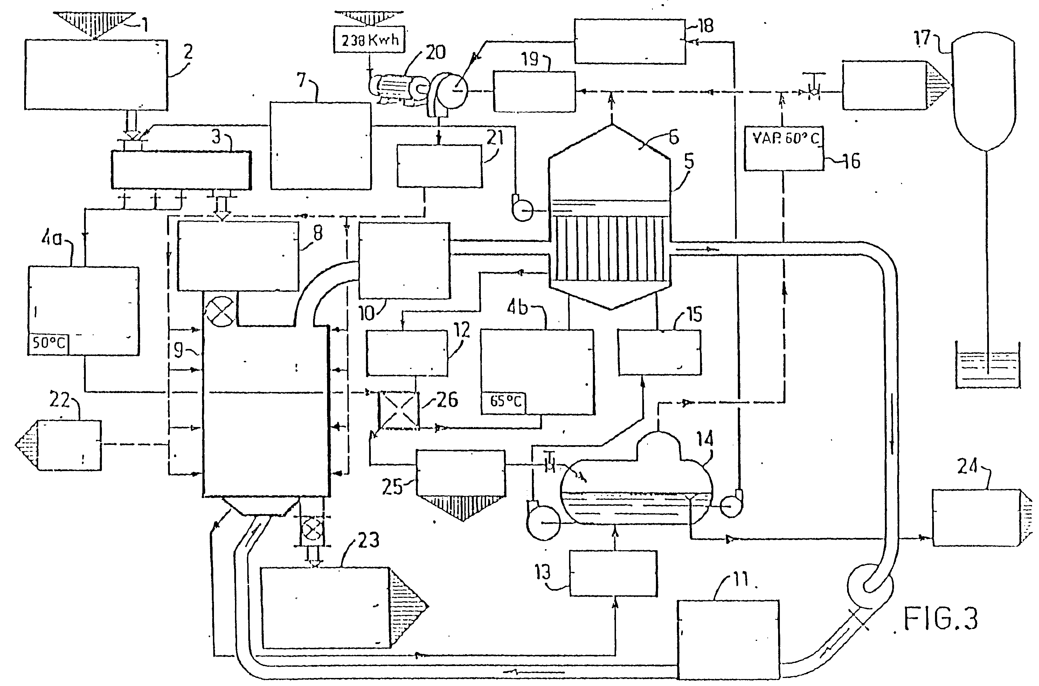

Figure 3 : En régime établi, les pulpes partiellement déshydratées (8) sont introduites dans le sécheur vertical (9). A la différence de l'exemple 2, on a éliminé des pulpes humides davantage d'eau et au lieu de récupérer un jus contenant 70,4 kg de matières sèches et 2 276 kg d'eau, on obtient un jus (4a) contenant 74 kg de matières sèches et 2 204 kg d'eau.

Le jus (4a) est préchauffé dans un échangeur

3

(26) alimenté par 1 609 kg d'eau à 75 °C provenant des eaux de condensation (12) de l'évaporateur (5).

On élimine en (25) 1 609 kg d'eau à 54,25 °C.

Le jus préchauffé (4b) présente une température de 65 °C : il est introduit en tant que fluide froid dans l'évaporateur (5). A la sortie de l'évaporateur (5) le jus concentré (7) contient 74 kg de matières sèches et 913 kg d'eau.

Le faisceau de l'évaporateur (5) est alimenté par un mélange (10) air/vapeur à 95 °C contenant 2 057 kg d'air et 2 181 kg d'eau. A la sortie du faisceau de l'évaporateur, on obtient un mélange (11) air/vapeur à 70 °C contenant 2 057 kg d'air et 572 kg de vapeur, qui est réinjecté dans le bas du sécheur (9).

On envoie dans un ballon d'auto-évaporation (14) les 1 718 kg d'eaux de retour (13) du sécheur (9) qui présentent une température de 75 °C.

On dirige vers l'évaporateur (5) 369 kg d'eau (15) à 60 °C — provenant du ballon (14) — qui sont totalement évaporés. A la sortie de l'évaporateur (5) on récupère 1 660 kg de vapeur à 60 °C dont 31 kg sont dirigés vers le condenseur (17).

Le condenseur (17) reçoit 76 kg de vapeur à 60 °C provenant d'une part de la vapeur (6) produite par l'évaporateur (5) et d'autre part du ballon (14) qui fournit 45 kg de vapeur à 60 °C intégralement dirigés vers le condenseur (17).

On apporte au motocompresseur (20) 1 629 kg de vapeur (19) à 60 °C et 244 kg d'eau de désurchauffe (18) provenant du ballon (14). Le motocompresseur (20) fournit 1 873 kg de vapeur (21) à 110 °C.

Les pertes (22) du système sont de 155 kg de vapeur. Le ballon (14) fournit 1 060 kg d'eau (24) à 60 °C.

A la sortie du sécheur, on récupère 1 000 kg de pulpes de betteraves (23) contenant 900 kg de matières sèches et 100 kg d'eau.

On a ainsi éliminé 2 900 kg d'eau des pulpes humides (2) sortant du premier étage de pressage (1).

La puissance nécessaire pour recomprimer les 1 629 kg de vapeur est de 238 kWh. La dépense énergétique n'est donc que de 0,082 kWh par kg d'eau éliminé. Comme dans l'exemple 2, le bilan global tient compte de l'énergie nécessaire au second pressage, et ressort à 0,092 kWh par kg d'eau éliminé, soit 230 Kcal par kg d'eau éliminé (au coefficient 2,5).

Exemple 4

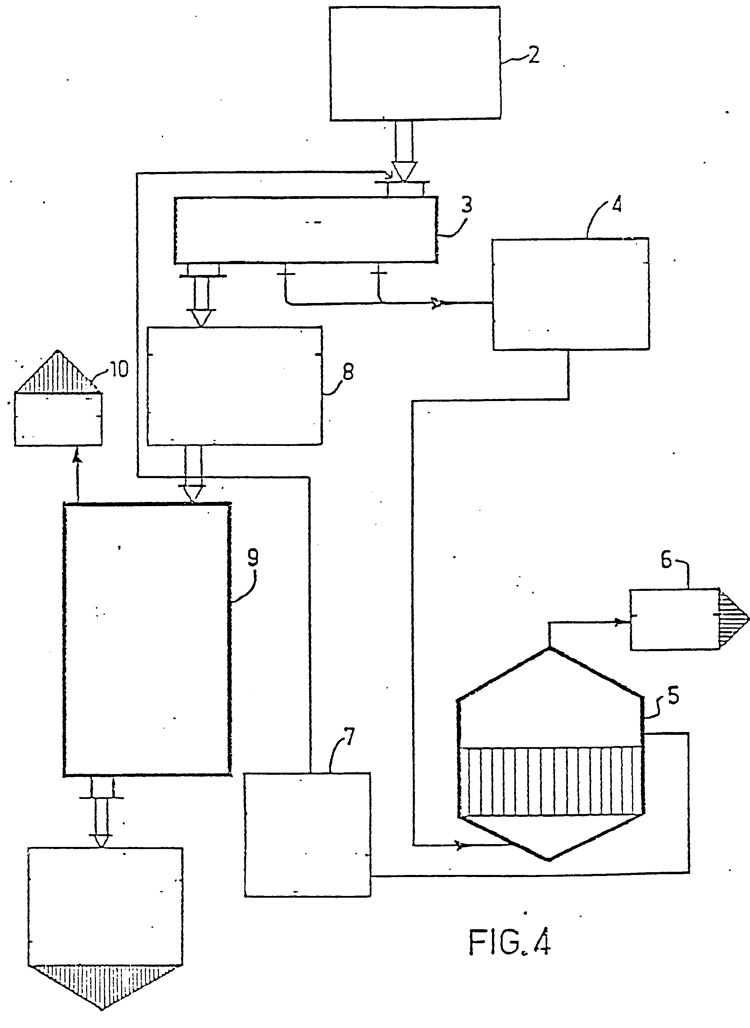

Figure 4 : En régime établi, de la luzerne humide (2) contenant 2 000 kg de matières sèches et 8 000 kg d'eau est dirigée vers une presse (3).

Le jus (4) de pressage contenant 350 kg de matières sèches et 4 220 kg d'eau est envoyé dans un évaporateur (5) qui génère 3 850 kg de vapeur (6) et restitue un jus concentré (7) contenant 350 kg de matières sèches et 350 kg d'eau.

Le jus concentré (7) est réinjecté dans la presse (3).

Après pressage, la luzerne pressée (8) contenant 2 000 kg de matières sèches et 4 150 kg d'eau est introduite dans un sécheur (9).

On obtient 3 925 kg de vapeur (10) et de la luzerne séchée (23) contenant 2 000 kg de matières sèches et 225 kg d'eau.

Exemple 5

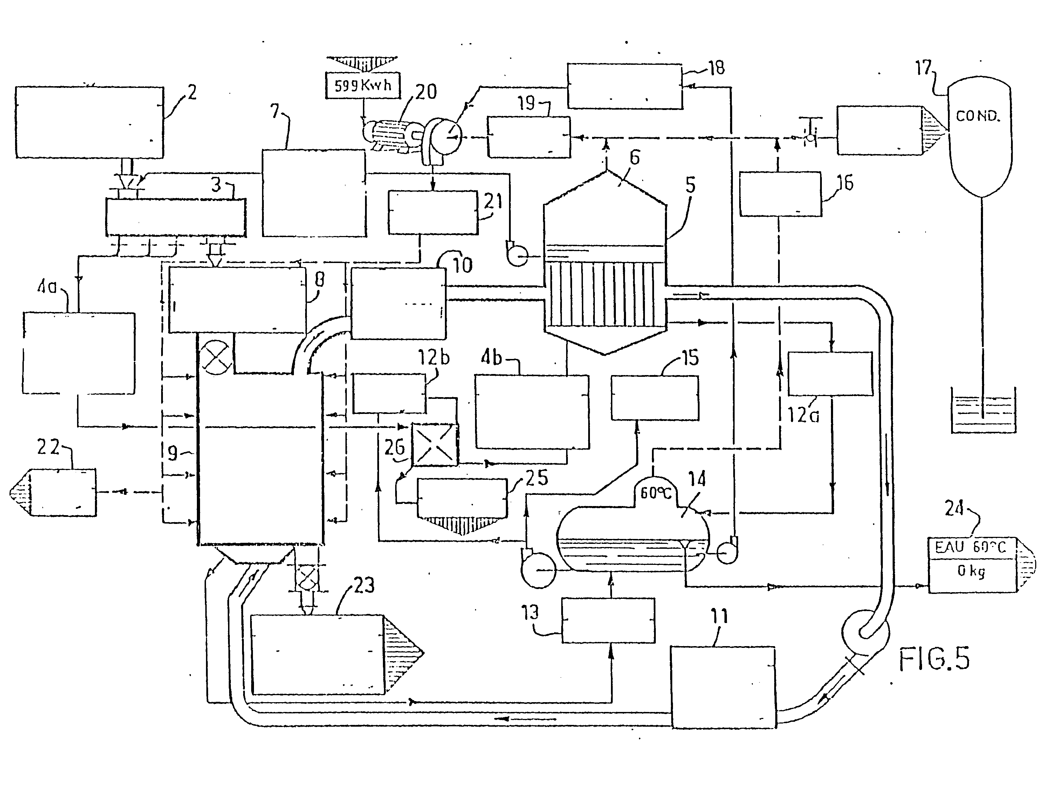

Figure 5 : En régime établi, comme dans l'exemple précédent, on introduit la luzerne pressée (8) dans le sécheur (9).

Le jus (4a) du pressage présentant une température de 25 °C est préchauffé dans un échangeur (26) jusqu'à une température de 55 °C.

L'échangeur (26) est alimenté par 7 346 kg d'eau (12b) à 60 °C provenant du ballon (14). Les eaux refroidies à 42,4 °C sont rejetées en (25).

Le jus préchauffé (4b) est introduit en tant que fluide froid dans l'évaporateur (5) dont le faisceau est alimenté par le mélange (10) air/vapeur à 95 °C contenant 5 019 kg d'air et 5 320 kg d'eau puis réinjecté dans la presse (3).

A la sortie de l'évaporateur (5) on obtient un mélange (11) air/vapeur à 70 °C contenant 5 019 kg d'air et 1 395 kg de vapeur, qui est réinjecté dans le bas du sécheur (9).

On envoie dans un ballon d'auto-évaporation (14) les 4 366 kg d'eaux de retour (13) du sécheur (9) qui présentent une température de 75 °C ainsi que 3 925 kg d'eau de condensation (12a) à 75 °C de l'évaporateur (5).

On dirige vers l'évaporateur (5) 110 kg d'eau (15) à 60 °C — provenant du ballon (14) — qui sont totalement évaporés. A la sortie de l'évaporateur (5) on récupère 3 960 kg de vapeur (6) à 60 °C.

Le ballon (14) fournit 221 kg de vapeur à 60 °C dont 80 kg sont dirigés vers le condenseur (17), et 41 kg vers le motocompresseur (20).

On apporte au motocompresseur (20) 4 101 kg de vapeur (19) à 60 °C et 614 kg d'eau de désurchauffe (18) provenant du ballon (14). Le motocompresseur (20) fournit 4 715 kg de vapeur (21) à 110 °C.

Les pertes (22) du système sont de 349 kg de vapeur.

A la sortie du sécheur (9) on récupère 2 225 kg de luzerne séchée contenant 225 kg d'eau et 2 000 kg de matières sèches.

On remarquera, par ailleurs, que toutes les eaux alimentant le ballon (14) sont recyclées.

La puissance nécessaire pour recomprimer les 4 101 kg de vapeur est de 599 kWh, et ce pour 10 000 kg de luzerne à 20 % de matières sèches. La puissance nécessaire au second pressage est de 70 Kwh. La dépense énergétique totale est donc de 699 kWh pour 7 775 kg d'eau éliminés soit 0,086 kWh par kg d'eau éliminé, ou encore de 215 kcal par kg d'eau éliminé. Ce chiffre est à comparer aux 600-750 Kcal par kg d'eau éliminé dépensées avec un sécheur classique.

Exemple 6

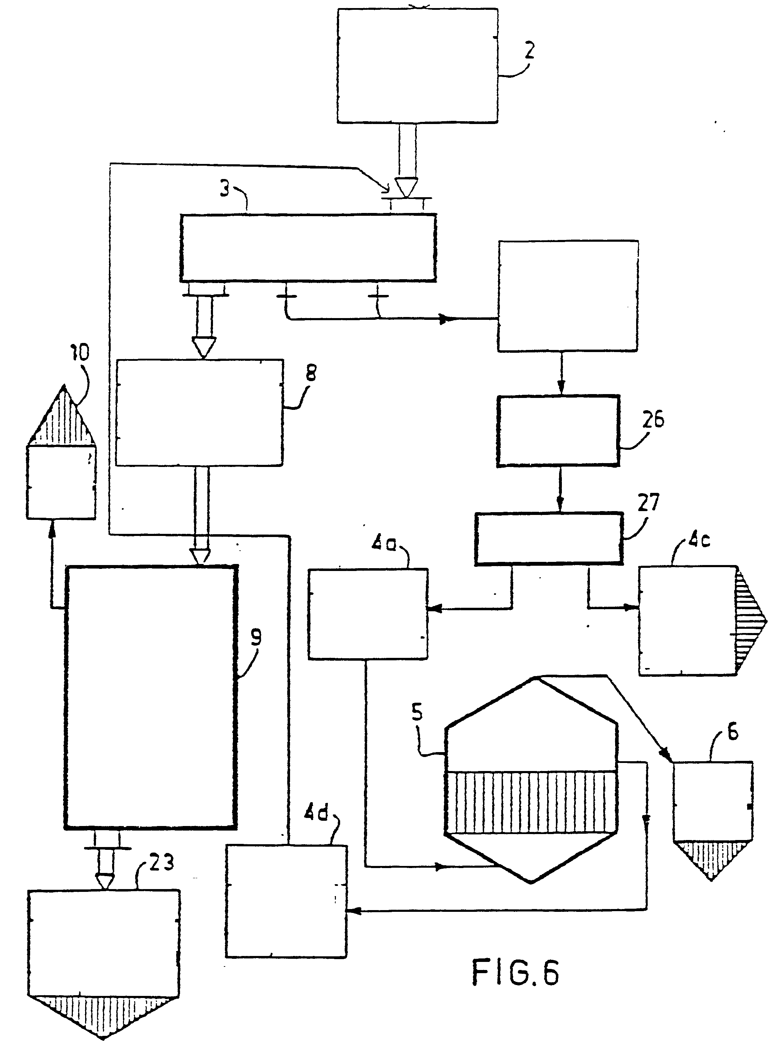

Figure 6 : En régime établi, comme dans le cas de l'exemple 4, de la luzerne humide (2) contenant 20 % de matières sèches, est introduite dans une presse (3).

Le jus (4) du pressage contenant 350 kg de matières sèches et 4 200 kg d'eau subit avant évaporation une étape de floculation (26) suivie d'une étape de centrifugation (27) : on récupère un sérum (4a) contenant 190 kg de matières sèches et 4 040 kg d'eau et un floculat de protéines (4c) contenant 160 kg de matières sèches et 160 kg d'eau.

Le sérum (4a) est dirigé vers un évaporateur (5) qui fournit 3 850 kg de vapeur (6). Le sérum concentré (4d) contenant 190 kg de matières sèches et 190 kg d'eau est réinjecté dans la presse (3). Le sécheur (9) reçoit, après pressage, la luzerne (8) contenant 1 840 kg de matières sèches et 3 990 kg d'eau. On obtient 3 780 kg de vapeur (10) et de la luzerne séchée (23) contenant 1 840 kg de matières sèches et 210 kg d'eau.

Exemple 7

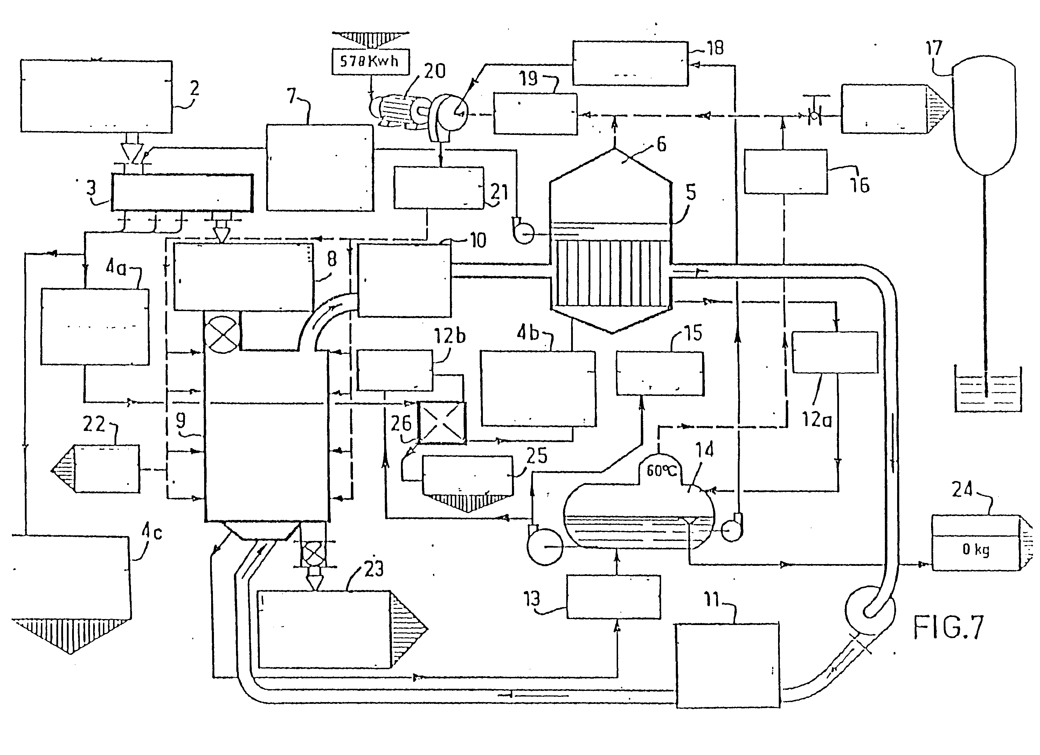

Figure 7 : En régime établi, comme dans l'exemple 5, on introduit la luzerne pressée (8) contenant 1 840 kg de matières sèches et 3 990 kg d'eau dans le séchoir (9).

Le jus de pressage est conformément à ce qui est décrit dans l'exemple 6, séparé en un sérum (4a) contenant 190 kg de matières sèches et 4 040 kg d'eau et un floculat (4c) contenant 160 kg de matières sèches et 160 kg d'eau de protéines.

Le sérum (4a) présentant une température de 25 °C est préchauffé à 55 °C dans un échangeur (26).

L'échangeur (26) est alimenté par 7 152 kg d'eau (12b) à 60 °C provenant du ballon (14). Les eaux refroidies à 43,1 °C sont rejetées en (25).

Le sérum préchauffé (4b) est introduit en tant que fluide froid dans l'évaporateur (5) dont le faisceau est alimenté par le mélange (10) air/vapeur à 95 °C contenant 4 834 kg d'air et 5 124 kg de vapeur puis le sérum concentré (7) contenant 190 kg de matières sèches et 190 kg d'eau est réinjecté dans la presse (3). A la sortie de l'évaporateur (5) on obtient un mélange (11) air/vapeur à 70 °C contenant 4 834 kg d'air et 1 344 kg de vapeur qui est injecté dans le bas du sécheur (9).

On envoie dans le ballon d'auto-évaporation (14) les 4 213 kg d'eau de retour (13) du sécheur (9) qui présentent une température de 75 °C ainsi que 3 780 kg d'eau de condensation (12a) à 75 °C de l'évaporateur (5).

On dirige vers l'évaporateur (5) 36 kg d'eau (15) à 60 °C — provenant du ballon (14) — qui sont totalement évaporés. A la sortie de l'évaporateur (5), on récupère 3 886 kg de vapeur (6) à 60 °C.

Le ballon (14) fournit 213 kg de vapeur à 60 °C dont 141 kg sont dirigés vers le condenseur (17), et 72 kg vers le motocompresseur (20).

On apporte ainsi au motocompresseur (20) 3 958 kg de vapeur (19) et 592 kg d'eau de désurchauffe (18) provenant du ballon (14). Le moto-compresseur (20) fournit 4 550 kg de vapeur (21) à 110 °C.

Les pertes (22) du système sont de 337 kg de vapeur.

On remarquera, par ailleurs, que toutes les eaux alimentant le ballon (14) sont recyclées.

La puissance nécessaire à la recompression de 3 958 kg de vapeur est de 578 kWh. La puissance nécessaire au second pressage étant de 70 kWh, la dépense énergétique totale ressort à 648 kWh pour 7 630 kg d'eau éliminés, soit 0,084 9 kWh par kg d'eau éliminé ou encore 212 kcal par kg d'eau éliminé.

Ainsi, on constate que le procédé de déshydratation de végétaux humides, selon l'invention, permet d'obtenir une augmentation très sensible du taux de matières sèches et que si le jus de pressage desdits végétaux est concentré dans un évaporateur dans lequel il joue le rôle de fluide froid, on réalise des économies substantielles d'énergie lorsque l'évaporateur est intégré dans une installation de séchage par recompression de vapeur.

**Revendications**

1. Procédé de déshydratation de végétaux humides, consistant à faire subir à ces végétaux humides un ou plusieurs pressages successifs, le jus du dernier pressage étant concentré dans un évaporateur servant, en régime continu établi, à réimbiber les végétaux humides avant ce dernier pressage, les végétaux humides étant, après le dernier pressage, introduits dans un sécheur caractérisé en ce que les éléments chauffants du sécheur sont alimentés par de la vapeur recomprimée à l'aide d'un motocompresseur alimenté avec de la vapeur produite par l'évaporateur dont le fluide froid est constitué du jus provenant du dernier pressage et dont le faisceau est alimenté par le mélange air/vapeur issu des végétaux humides pendant leur séchage, le jus de pressage étant amené à une concentration inférieure à 60 % de matières sèches.

2. Procédé selon la revendication 1, caractérisé en ce que le jus provenant du dernier pressage est, avant entrée dans l'évaporateur, préchauffé par passage dans un échangeur alimenté avec de l'eau de condensation de l'évaporateur.

3. Procédé de séchage selon l'une des revendications 1 ou 2, caractérisé en ce que les végétaux humides sont des pulpes de betteraves et qu'elles sont soumises à deux pressages successifs.

4. Procédé de séchage selon l'une des revendications 1 ou 2, caractérisé en ce que les végétaux humides sont de la luzerne et qu'elle est soumise à un seul pressage.

5. Procédé selon la revendication 4, caractérisé en ce qu'avant concentration dans l'évaporateur, le jus provenant du dernier pressage est floculé et centrifugé de façon à obtenir un sérum et un floculat constitué principalement de protéines.

6. Procédé selon la revendication 5, caractérisé en ce que le motocompresseur est alimenté avec de la vapeur produite par l'évaporateur dont le fluide froid est constitué par le sérum séparé du jus du dernier pressage et dont le faisceau est alimenté par le mélange air/vapeur issu de la luzerne humide pendant son séchage.

7. Procédé selon la revendication 6, caractérisé en ce que le sérum séparé du jus de pressage est, avant entrée dans l'évaporateur, préchauffé par passage dans un échangeur alimenté avec des eaux provenant du ballon récupérant les eaux de retour du sécheur et les eaux de condensation de l'évaporateur.

**Claims**

1. Process for the dehydration of wet plants, consisting in subjecting these wet plants to one or more successive pressings, the juice from the last pressing being concentrated in an evaporator which is used, in continuous steady state operation, for resoaking the wet plants before this last pressing, the wet plants being, after the last pressing, introduced into a drier characterized in that the heating elements of the drier are supplied with recompressed steam by means of a compressor which is supplied with steam produced by the evaporator, of which the cold fluid consists of the juice resulting from the last pressing and of which the shell is supplied with the air/steam mixture resulting from the wet plants during their drying, the juice from pressing being brought to a concentration of less than 60 % of dry matter.

2. Process according to Claim 1, characterized in that the juice resulting from the last pressing is preheated, before entering the evaporator, by passing through an exchanger supplied with water of condensation from the evaporator.

3. Process for drying according to one of Claims 1 or 2, characterized in that the wet plants are beet pulps and in that they are subjected to two successive pressings.

4. Process for drying according to one of Claims 1 or 2, characterized in that the wet plants are lucern and in that they are subjected to a single pressing.

5. Process according to Claim 4, characterized in that, before concentration in the evaporator, the juice resulting from the last pressing is flocculated and centrifuged so as to obtain a serum and a flocculate mainly consisting of proteins.

6. Process according to Claim 5, characterized in that the compressor is supplied with steam produced by the evaporator of which the cold fluid consists of the serum separated from the juice of the last pressing and of which the shell is supplied with the air/steam mixture resulting from the wet lucern during its drying.

7. Process according to Claim 6, characterized in that the serum separated from the juice of pressing is preheated, before entering the evaporator, by passing through an exchanger supplied with waters originating from the reservoir which collects the waters returning from the dryer and the waters of condensation from the evaporator.

**Patentansprüche**

1. Verfahren zur Entwässerung von nassen Pflanzen, welches darin besteht, daß diese nassen Pflanzen einem oder mehreren aufeinanderfolgenden Auspreßvorgängen unterworfen werden, wobei der Saft der letzten Auspressung in einem Verdampfer konzentriert wird, der dazu dient, in stetigem Ruhebetrieb die nassen Pflanzen vor diesem letzten Auspreßvorgang wieder einzuweichen, und die nassen Pflanzen nach der letzten Auspressung in einen Trockner eingebracht werden, dadurch gekennzeichnet, daß die Heizelemente des Trockners mit mit Hilfe eines Motorkompressors wieder verdichtetem Dampf gespeist werden, der Motorkompressor mit von dem Verdampfer erzeugtem Dampf gespeist wird, wobei das kalte Strömungsmittel des Verdampfers durch den aus der letzten Auspressung stammenden Saft gebildet, sein Rohrbündel durch das aus den nassen Pflanzen während ihrer Trocknung austretende Luft/Dampfgemisch gespeist und der Saft der Auspressung auf eine Konzentration von unter 60 % des trockenen Materials gebracht wird.

2. Verfahren nach Anspruch 1, dadurch gekennzeichnet, daß der aus der letzten Auspressung stammende Saft vor Eintritt in den Verdampfer durch Durchgang in einem mit dem Kondensationswasser des Verdampfers gespeisten Austauscher vorgewärmt wird.

3. Trocknungsverfahren nach einem der Ansprüche 1 oder 2, dadurch gekennzeichnet, daß die nassen Pflanzen Zuckerrübenpulpen sind, die zwei aufeinanderfolgenden Auspreßvorgängen unterworfen werden.

4. Trocknungsverfahren nach einem der Ansprüche 1 oder 2, dadurch gekennzeichnet, daß die nassen Pflanzen Luzernen sind, die einem einzigen Auspreßvorgang unterworfen werden.

5. Verfahren nach Anspruch 4, dadurch gekennzeichnet, daß der aus dem letzten Auspreßvorgang stammende Saft vor der Konzentration im Verdampfer geflockt und zentrifugiert wird, um ein Serum und eine hauptsächlich aus Proteinen bestehende Flockung zu erhalten.

6. Verfahren nach Anspruch 5, dadurch gekennzeichnet, daß der Motorkompressor mit von dem Verdampfer erzeugtem Dampf gespeist wird, das kalte Strömungsmittel des Verdampfers durch das von dem Saft der letzten Auspressung abgetrennte Serum gebildet und sein Rohrbündel mit dem aus der nassen Luzerne während ihrer Trocknung austretenden Luft/Dampfgemisch gespeist wird.

7. Verfahren nach Anspruch 6, dadurch gekennzeichnet, daß das von dem Saft der Auspressung abgetrennte Serum vor Eintritt in den Verdampfer durch Durchgang in einem Austauscher vorgewärmt wird, der mit dem aus dem das von dem Trockner zurückkehrende Wasser und das Kondensationswasser des Verdampfers wieder sammelnden Glaskolben austretenden Wasser gespeist wird.

FIG.1

255 Kwh

60°C

56°C

60°C

0 115 493

FIG. 2

238 Kwh

VAP. 60°C

50°C

65°C

0 115 493

FIG.3

FIG.4

FIG.5

599 Kwh

COND.

EAU 60°C
0 kg

60°C

0 115 493

FIG.6

FIG.7

570 Kwh

0 115 493

0 kg

60°C